# EUROPÄISCHE PATENTSCHRIFT

(11) **EP 0 840 809 B1**
(45) Veröffentlichungstag und Bekanntmachung des Hinweises auf die Patenterteilung: **21.04.1999**
(21) Anmeldenummer: 96922744.6
(22) Anmeldetag: 05.07.1996
(51) Int. Cl.: C23C 30/00, C23C 28/00, F01D 5/28

(54) **ERZEUGNIS MIT EINEM METALLISCHEN GRUNDKÖRPER MIT KÜHLKANÄLEN UND DESSEN HERSTELLUNG**
PRODUCT WITH A METALLIC BASE BODY PROVIDED WITH COOLING CHANNELS AND ITS MANUFACTURE
PRODUIT AVEC UN CORPS DE BASE METALLIQUE POURVU DE CANAUX DE REFROIDISSEMENT ET SA FABRICATION

(30) Priorität: 25.07.1995 DE 19527149
(43) Veröffentlichungstag der Anmeldung: 13.05.1998
(73) Patentinhaber: SIEMENS AKTIENGESELLSCHAFT, 80333 München (DE)
(72) Erfinder: CZECH, Norbert, D-46286 Dorsten (DE); HALBERSTADT, Knut, D-45468 Mülheim (DE)
(86) Internationale Anmeldenummer: DE9601207
(87) Internationale Veröffentlichungsnummer: WO9705299

(56) Entgegenhaltungen:
- EP-A- 0 253 754
- EP-A- 0 386 618
- WO-A-89/07159
- DE-C- 2 707 225
- Patent Abstracts of Japan, Band 94, Nr. 11; & JP,A,6306568, (MITSUBISHI HEAVY IND LTD.), 1994-11-01

## Beschreibung

Die Erfindung betrifft ein Erzeugnis mit einem metallischen Grundkörper, mindestens einem im Inneren des Grundkörpers gelegenen Längskanal und einer Anzahl davon abzweigender, jeweils eine zugehörige Austrittsöffnung in dem Grundkörper habender Querkanäle. Die Erfindung betrifft außerdem ein Verfahren zur Herstellung eines solchen Erzeugnisses.

Dabei bezieht sich die Erfindung insbesondere auf ein derartiges Erzeugnis, welches als Gasturbinen-Komponente, insbesondere als Schaufel, ausgebildet ist.

Für stationäre Gasturbinen (mit früher üblichen Werkstofftemperaturen von ca. 950 °C) und für Gasturbinen in Flugtriebwerken (mit früher üblichen Eintrittstemperaturen von ca. 1100 °C) ist eine Steigerung der Eintrittstemperatur durch den Einsatz speziell entwickelter Legierungen als Grundwerkstoffe für die thermisch hoch belasteten Teile, wie Leitschaufeln, Laufschaufeln, Hitzeschildelemente und dergleichen, erreicht worden. Insbesondere durch den Einsatz einkristalliner Superlegierungen können nun Metalltemperaturen von deutlich über 1000 °C zur Anwendung kommen. Dadurch kann der thermodynamische Wirkungsgrad einer Gasturbine erhöht werden.

Neben thermomechanischen Beanspruchungen sind die Komponenten von Gasturbinen auch chemischen Angriffen, beispielsweise durch Rauchgase mit Temperaturen bis über 1300 °C, ausgesetzt. Für eine hinreichende Beständigkeit gegenüber solchen Angriffen ist eine solche Komponente mit einer metallischen Schutzschicht überzogen. Die Schutzschicht muß auch hinreichend gute mechanische Eigenschaften aufweisen. Insbesondere im Hinblick auf die mechanische Wechselwirkung zwischen der Schutzschicht und dem Grundwerkstoff des Bauteiles sollte die Schutzschicht hinreichend duktil sein, um eventuellen Verformungen des Grundwerkstoffs folgen zu können; sie sollte auch möglichst rißunanfällig sein, um eine Freilegung mit anschließender Korrosion und Oxidation des Grundwerkstoffes zu verhindern.

Metallische Schutzschichten für metallische Komponenten, insbesondere für Komponenten für Gasturbinen, zur Erhöhung der Korrosions- und/oder Oxidationsbeständigkeit sind im Stand der Technik in einer großen Vielfalt bekannt. Eine Klasse von Legierungen für Schutzschichten ist unter dem Sammelbegriff "MCrAlY-Legierungen" bekannt, wobei M für mindestens eines der Elemente aus der Gruppe umfassend Eisen (Fe), Kobalt (Co) und Nickel (Ni) steht, und wobei weitere wesentliche Bestandteile Chrom (Cr), Aluminium (Al) und Yttrium (Y) sind.

Eine Schutzschicht aus einer MCrAlY-Legierung, die die Korrosions- und Oxidationseigenschaften eines Erzeugnisses in einem Oberflächen-Temperaturbereich von 600 bis 1150 °C verbessert, ist in der EP 0 412 397 Al beschrieben. Die Schutzschicht weist neben 22 - 60 % Chrom, 0 - 15 % Aluminium, 0,3 - 2 % Yttrium oder 0,3 - 2 % eines anderen Elementes aus der Gruppe der Seltenen Erden einen Anteil von 1 - 20 % Rhenium auf. Grundlage der Legierung ist Nickel; gegebenenfalls können weitere Elemente zulegiert sein, insbesondere Kobalt. Aufgrund der guten thermischen Leitfähigkeit der metallischen Schutzschicht wird das mit der Schutzschicht überzogene Bauteil nahezu derselben thermischen Belastung ausgesetzt wie die Schutzschicht selbst.

Eine weitere korrosionsfeste Schutzbeschichtung für Komponenten für Gasturbinen und andere Komponenten aus Nickel-Basis- oder Kobalt-Basis-Legierungen ist aus der EP 0 486 489 B1 bekannt. Diese Schutzbeschichtung enthält die folgenden Elemente (in Gewichtsanteilen angegeben): 25 - 40 % Nickel, 28 - 32 % Chrom, 7 - 9 % Aluminium, 1 - 2 % Silizium, mindestens 5 % Kobalt, 0,3 - 1 % Seltene Erden, insbesondere Yttrium. Die Eigenschaft der einzelnen Bestandteile sind in dieser Druckschrift explizit angegeben.

In der EP 0 397 731 B1 ist eine zweilagige metallische Schutzschicht aus zwei unterschiedlichen Legierungen beschrieben. Die äußere Legierung ist eine MCrAlY-Legierung und enthält (in Gewichtsanteilen angegeben) 15 - 40 % Chrom, 3 - 15 % Aluminium sowie 0,2 - 3 % mindestens eines Elements aus der Gruppe Yttrium, Tantal, Hafnium, Scandium, Zirkonium, Niob und Silizium. Diese äußere Legierung ist ihrerseits gegebenenfalls, insbesondere bei innengekühlten Metallgegenstanden, zum Schutz gegen besonders hohe Temperaturen mit einer Thermobarriereschicht belegt. Die Thermobarriereschicht kann Zirkoniumoxid mit einem Zusatz von Yttriumoxid sein. Um ein mögliches Abplatzen der Thermobarriereschicht von der äußeren Legierung zu verhindern, ist eine Oxidation der äußeren Legierung vor Aufbringen der Thermobarriereschicht vorgesehen.

Im Stand der Technik ist es auch bekannt, bei einer Turbinenschaufel eine Innenbeschichtung der relativ engen Kühlkanäle mit einem Metall, z. B. mit Aluminium, durchzuführen (J.E. Restall et al.: "A Process for Protecting Gas Turbine Blade Cooling Passages Against Degradation", Superalloys, 1980, pp. 405 - 410). Ein weiteres Verfahren zum Abscheiden von Aluminium auf einer Nickelverbindung, das auch für innere Oberflächen und Kühlkanäle anwendbar ist, ist ebenfalls in der Literatur beschrieben (R.S. Parzuchowski: "Gas Phase Deposition of Aluminum on Nickel Alloys", Thin Solid Films 45, 1977, pp. 349 - 355). Möglich ist auch die Verwendung von Chrom oder einer Kombination von Aluminium und Chrom. Ergänzend ist hinzuweisen auf die DE 41 19 967 C1 und JP-A-6-306 568. Festgehalten sei, daß der Stand der Technik Innenbeschichtungen für Kühlkanäle generell nur zusammen mit gleichartigen Außenbeschichtungen kennt.

Schaufeln für hochentwickelte Gasturbinen, z.B. für Flugzeugtriebwerke, und in zunehmendem Maße auch für stationäre Gasturbinen, sind heutzutage komplex aufgebaut. Man kann dabei folgende Merkmale unterscheiden: Ein metallischer Grundkörper, d.h. die eigentliche Schaufel, ist aus einem hoch-warmfesten Werkstoff hohl und dünnwandig gegossen. Dadurch soll eine effiziente Kühlung mit einem Kühlmedium, insbesondere mit einem Gas, wie Luft, von der Innenseite der Schaufel her ermöglicht werden. Der Grundkörper weist dazu mindestens einen Kühl-Längskanal und eine Anzahl davon abzweigender Kühl-Querkanäle auf. Auf der Heißgasseite der Schaufel ist eine Beschichtung vorgesehen, die den metallischen Grundkörper gegen Oxidation und Hochtemperatur-Korrosion schützt. In vielen Fällen existiert darauf eine weitere heißgasseitige Beschichtung aus einem keramischen Werkstoff zur Verringerung des Wärmeflusses in der Schaufel. Wünschenswert ist auch eine Innenbeschichtung zum Schutz vor oxidationsbedingter Wanddikkenschwächung und Rißeinleitung auf der Kühlmittelseite. Die Kühl-Querkanale können hierbei als Perforationen im Schaufelblatt und/oder der/den Plattform(en) angesehen werden, durch die das Kühlmmedium austritt. Hierdurch kann eine besonders gute Verteilung und ggf. auch die Bildung eines Kühlmediumschleiers auf der Heißgasseite erzielt werden. Dieser führt zu einer Filmkühlung.

Die Aufgabe der Erfindung besteht darin, ein kostengünstig herstellbares Erzeugnis mit Außen- und Innenbeschichtung anzugeben. Außerdem soll ein preisgünstiges Herstellverfahren für ein solches Erzeugnis angegeben werden, durch das insbesondere alle Querkanäle mit einer Beschichtung versehen werden, ohne daß ihr Querschnitt unkontrolliert verengt wird.

Zur Lösung der erstgenannten Aufgabe wird erfindungsgemäß ein Erzeugnis angegeben, mit
a) einem metallischen Grundkörper aus einer Legierung;
b) mindestens einem im Inneren des Grundkörpers gelegenen Längskanal und einer Anzahl davon abzweigender, jeweils eine zugehörige Austrittsöffnung in dem Grundkörper habender Querkanäle;
c) einer metallischen Deckschicht, die eine von der Legierung des Grundkörpers verschiedene Legierung aufweist und die außen direkt auf den Grundkörper aufgebracht ist; und
d) einer metallischen Anreicherungsschicht, die den Grundkörper lediglich in dem Längskanal und in den Querkanälen bedeckt, wodurch ein beschichteter Kühl-Längskanal und eine Anzahl davon abzweigender beschichteter Kühl-Querkanäle für die Durchströmung mittels eines Kühlmediums gebildet sind, wobei die Anreicherungsschicht an jeder Austrittsöffnung zusätzlich einen geringen Teil der Deckschicht bedeckt.

Die Deckschicht besteht vorzugsweise aus einer MCrAlY-Legierung und hat weiterhin vorzugsweise eine Dicke von 180 µm bis 300 µm. Als MCrAlY-Legierung kommen insbesondere die aus der EP 0 412 397 A1 und der EP 0 486 489 B1 bekannten Legierungen in Frage.

Die Anreicherungsschicht auf dem Erzeugnis hat vorzugsweise eine Dicke von 30 µm bis 100 µm.

Die Anreicherungsschicht ist insbesondere als Diffusionsschicht ausgebildet, d.h. als Schicht, welche durch Eindiffusion eines gesondert aufgebrachten Metalls in den Grundkörper gebildet ist. Als solches Metall in Frage kommen insbesondere Aluminium, Chrom sowie Chrom-Aluminium-Legierungen, wobei Aluminium ohne Chrom besonders bevorzugt ist.

Besonders bevorzugt ist es auch, daß das Erzeugnis eine keramische Wärmedämmschicht aufweist, welche außen die Deckschicht und an jeder Austrittsöffnung auch die Anreicherungsschicht auf den geringen Teilen der Deckschicht, wo die Anreicherungsschicht die Deckschicht bedeckt, bedeckt. Diese Wärmedämmschicht hat weiterhin vorzugsweise eine Dicke von 100 µm bis 500 µm, insbesondere von 200 µm bis 300 µm.

Das Erzeugnis, insbesondere mit einer oder mehreren der vorstehend beschriebenen bevorzugten Weiterbildungen, ist insbesondere als Gasturbinenkomponente, beispielsweise als Schaufel oder Hitzeschildelement, ausgebildet. Seine gegenständlichen Merkmale machen es besonders geeignet zur Auslegung dahingehend, daß es den mechanischen, thermischen und chemischen Belastungen, mit denen beim Betrieb in einer Gasturbine, wobei das Erzeugnis von heißem Rauchgas umströmt wird, zu rechnen ist, zu widerstehen vermag.

Zur Lösung der auf ein Verfahren zur Herstellung eines Erzeugnisses bezogenen Aufgabe angegeben wird als erste erfindungsgemäße Ausführung ein Verfahren zur Herstellung eines Erzeugnisses, mit folgenden Schritten in der angegebenen Reihenfolge:
a) ein Grundkörper aus einer Legierung mit mindestens einem im Inneren gelegenen Längskanal wird mit einer metallischen Deckschicht versehen, die eine von der Legierung des Grundkörpers verschiedene Legierung aufweist;
b) es werden Querkanale durch den Grundkörper und die Deckschicht zu dem Längskanal gebohrt;
c) der Grundkörper wird in dem Längskanal, in den Querkanälen und an Austrittsöffnungen der Querkanale auf jeweiligen geringen Teilen der Deckschicht mit einer metallischen Anreicherungsschicht versehen;
d) der Grundkörper mit der Deckschicht und der Anreicherungsschicht wird einer Wärmebehandlung unterzogen; und
e) die Deckschicht wird geglättet.

Zur Lösung der auf ein Verfahren bezogenen erfindungsgemäßen Aufgabe wird als zweite erfindungsgemäße Ausführung angegeben ein Verfahren zur Herstellung eines Erzeugnisses, mit folgenden Schritten in der angegebenen Reihenfolge:
a) ein Grundkörper mit mindestens einem im Inneren gelegenen Längskanal mit einer metallischen Deckschicht versehen;
b) es werden Querkanäle durch den Grundkörper und die Deckschicht zu dem Längskanal gebohrt;
c) der Grundkörper wird in dem Längskanal, in den Querkanälen und an Austrittsöffnungen der Querkanäle auf der Deckschicht auf jeweiligen geringen Teilen der Deckschicht mit einer Anreicherungsschicht versehen;
d) die Deckschicht wird geglättet;
e) die Deckschicht wird mit einer keramischen Wärmedämmschicht versehen; und
f) der Grundkörper mit der Deckschicht, der Anreicherungsschicht und der keramischen Warmedämmschicht wird einer Warmebehandlung unterzogen.

Zur ersten Ausführung des Verfahrens wird bemerkt, daß das Glätten der Deckschicht insbesondere dazu dient, eine beim Aufbringen der Anreicherungsschicht an unerwünschten Stellen entstandene, mit dem zur Bildung der Anreicherungsschicht benutzten Material angereicherte Oberflächenschicht zu entfernen.

Zur zweiten Ausführung des erfindungsgemäßen Verfahrens wird angemerkt, daß der Schritt des Glättens der Deckschicht entsprechend den Erfordernissen der aufzubringenden keramischen Warmedämmschicht vorgenommen wird, wobei wiederum eine möglicherweise entstandene unerwünschte Oberflächenschicht auf der Deckschicht entfernt wird.

Im Rahmen der ersten Ausführung des Verfahrens stellt die Deckschicht insbesondere eine Schutzschicht dar, welche den Grundkörper gegen Korrosion und/oder Oxidation schützen soll. Im Rahmen der zweiten Ausführung des Verfahrens dient die Deckschicht insbesondere als Haftschicht, um die keramische Wärmedämmschicht an den Grundkörper anzubinden. Diese Anbindung geschieht möglicherweise über einen auf der Deckschicht entstehenden, dünnen oxidischen Film. Dieser Film kann entstehen durch Oxidation der Deckschicht, er kann auch in einem separten Schritt aufgebracht werden. Gegebenenfalls kann auch ein durch Oxidation der Deckschicht gebildeter Film vor dem Aufbringen der keramischen Wärmedämmschicht noch modifiziert werden, insbesondere durch Einbringung eines weiteren chemischen Elements wie beispielsweise Stickstoff.

Die Deckschicht kann im Rahmen jedweder Ausführung des Verfahrens durch ein Niederdruck-Plasma-Spritzverfahren (LPPS) oder ein Vakuum-Plasma-Spritzverfahren (VPS) aufgebracht werden. Insbesondere das Vakuum-Plasma-Spritzverfahren wird bevorzugt zum Aufbringen einer Deckschicht aus einer MCrAlY-Legierung.

Zum Anbringen der Anreicherungsschicht wird vorzugsweise zumindest eines der Elemente Aluminium und Chrom, vorzugsweise Aluminium, auf den Grundkörper aufgedampft und eindiffundiert, so daß sich die Anreicherungsschicht durch Zulegieren von Aluminium oder Chrom zu dem Material des Grundkörpers bzw. der Deckschicht bildet.

Das Bohren der Querkanale in dem Grundkörper erfolgt vorzugsweise nach einem Laser-Bohrverfahren, einem elektrochemischen Senkverfahren (ECM) oder einem Funkenerosionsverfahren (EDM).

Soll im Rahmen des Verfahrens eine Warmedämmschicht aufgebracht werden, so geschieht dieses vorzugsweise durch ein atmosphärisches Plasma-Spritzverfahren (APS) oder ein physikalisches Aufdampfverfahren (PVD). Das Plasma-Spritzverfahren liefert dabei in besonders kostengünstiger Weise eine im wesentlichen unstrukturierte keramische Wärmedämmschicht, wohingegen das Aufdampfverfahren, welches in der Regel teurer ist als das Spritzverfahren, eine keramische Wärmedämmschicht zu liefern vermag, welche aus einzelnen, jeweils auf der Deckschicht aufgewachsenen säulenförmigen Kristalliten besteht. Eine solche säulenkristalline Wärmedämmschicht hat gegenüber einer unstrukturierten Wärmedämmschicht bedeutende Vorteile, die allerdings mit deutlich höheren Herstellkosten erkauft werden müssen. Die Auswahl zwischen unstrukturierter und säulenkristalliner Wärmedämmschicht muß daher für jeden Einzelfall besonders entschieden werden.

Die im Rahmen jeder Ausführung des Verfahrens vorgesehene Wärmebehandlung dient vorzugsweise zu einem Lösungsglühen und/oder einem Aushärten des beschichteten Grundkörpers.

Ein besonderer Vorteil der Erfindung liegt darin, daß beim Aufbringen der Innenbeschichtung die Außenoberfläche nicht abgedeckt werden muß. Außerdem wird durch die Fertigungsreihenfolge und durch die dem Beschichten folgenden Arbeitsschritte, insbesondere durch das Glätten, sichergestellt, daß weder zwischen der Bauteiloberfläche und der Deckschicht noch auf der Deckschicht Phasen mit erhöhtem Gehalt an Material der Anreicherungsschicht, insbesondere Aluminium, entstehen oder verbleiben. Von solchen Phasen ist nämlich bekannt, daß sie zur Rißbildung neigen. Die Rißbildung kann also weitgehend vermieden werden.

Das erfindungsgemäße Verfahren gewährleistet außerdem, daß alle Kühl-Querkanäle, d.h. alle Kühlluft-Austrittsbohrungen, beschichtet werden.

Bevorzugt wird die Anreicherungsschicht nach einem CVD-Verfahren (Chemical Vapour Deposition), insbesondere einem Diffusionsprozeß, aufgebracht. Durch diese Wahl des Aufbringverfahrens für die Innenbeschichtung wird eine Verunreinigung der Außenoberfläche klein gehalten. Da diese außerdem aus der - noch spritzrauhen - Deckschicht besteht, die bevorzugt nach dem VPS (Vacuum Pressure Spraying)- Verfahren oder nach dem LPPS (Low Pressure Plasma Spraying)-Verfahren hergestellt ist, kann im anschließenden Glättungsvorgang, der notwendigerweise ein Abrasivverfahren (Schleifprozeß) sein muß, eine restlose Entfernung aller unerwünschten Reste erreicht werden. Darüber hinaus kann die Anzahl der Wärmebehandlungen relativ klein bleiben.

Soll das Bauteil eine Wärmedämmschicht erhalten, so ist diese bevorzugt durch ein PVD-Verfahren (Physical Vapour Deposition) aufzubringen.

Die vorangehend beschriebenen Erzeugnisse haben als Turbinenkomponenten jeweils eine relativ hohe Lebensdauer.

Das Herstellverfahren bietet von der Fertigungsfolge her den Vorteil, daß die Querkanäle, d.h. die Kühlluftbohrungen, nicht verschlossen, sondern nur gut reproduzierbar verengt werden. Dies kann bei der Konstruktion einer Komponente im Zeichnungsmaß vorgehalten werden.

Ausführungsbeispiele der Erfindung werden im folgenden anhand der Zeichnung näher erläutert. Es zeigen:
- FIG 1: den Ausschnitt einer Gasturbinen-Schaufel ohne äußere Wärmedämmschicht;
- FIG 2: den Ausschnitt einer Gasturbinen-Schaufel mit äußerer Wärmedämmschicht;
- FIG 3: ein Flußdiagramm zur Herstellung einer Gasturbinen-Schaufel gemäß Figur 1; und
- FIG 4: ein Flußdiagramm zur Herstellung einer Gasturbinen-Schaufel gemäß Figur 2.

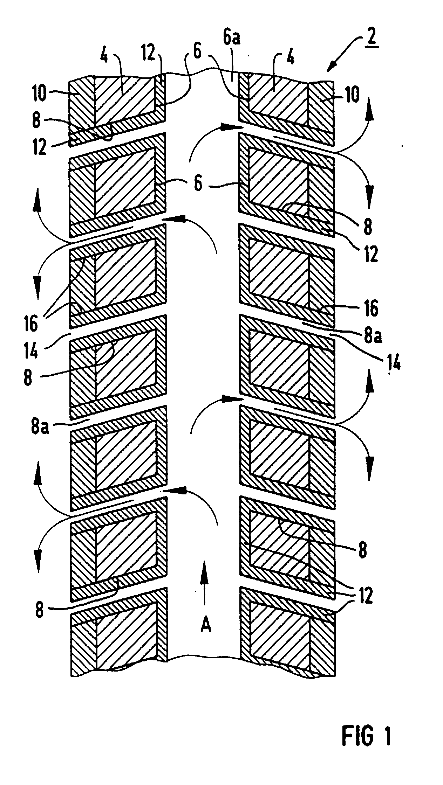

Nach Figur 1 besitzt eine Schaufel 2 für eine Gasturbine einen metallischen Grundkörper 4. Bei diesem Grundkörper 4 kann es sich insbesondere um einen solchen aus einer Nickel- oder Kobalt-Basis-Superlegierung handeln. Etwa zentral im Inneren des Grundkörpers 4 befindet sich ein Längskanal 6. Von diesem Längskanal 6 zweigt eine Anzahl von Querkanälen 8 ab. Längskanal 6 und Querkanäle 8 dienen, wie später deutlich wird, nach Innenbeschichtung zur Durchleitung eines Kühlmediums A, insbesondere eines Kühlgases wie Luft.

Außen auf jeder Seite des Grundkörpers 4 ist jeweils eine Deckschicht 10 direkt aufgebracht. Diese Deckschicht 10 besteht aus einer MCrAlY-Legierung. Sie besitzt vorzugsweise eine Dicke von 180 µm bis 300 µm. Die Auslaßöffnungen 14 sind dabei freigelassen. Die Deckschicht 10 ist jeweils bevorzugt durch ein Niederdruck-Plasma- oder ein Vakuum-Plasma-Spritzverfahren aufgebracht. Sie erfüllt die Funktion einer (äußeren) Schutzschicht.

Zur Innenbeschichtung ist eine Anreicherungsschicht 12 vorgesehen. Diese bedeckt nicht nur die Wände des Längskanals 6 und die Wände der Querkanäle 8. Vielmehr befindet sie sich auch im Außenbereich der Querkanäle 8 unter Freilassung von Austrittsöffnungen 14 und bedeckt dabei seitlich einen geringen Teil der Deckschicht 10. Dieser Bedeckungsteil ist mit 16 bezeichnet. Die Anreicherungsschicht 12 hat bevorzugt eine Dicke von 30 µm bis 100 µm. Sie ist bevorzugt durch ein Diffusionsverfahren aufgebracht, wobei Chrom und/oder Aluminium aufgedampft und eindiffundiert werden.

Es ist ersichtlich, daß die Schaufel 2 somit einen beschichteten Kühl-Längskanal 6a und eine Anzahl davon abzweigender beschichteter Kühl-Querkanäle 8a für die Durchströmung mittels des Kühlmediums A besitzt.

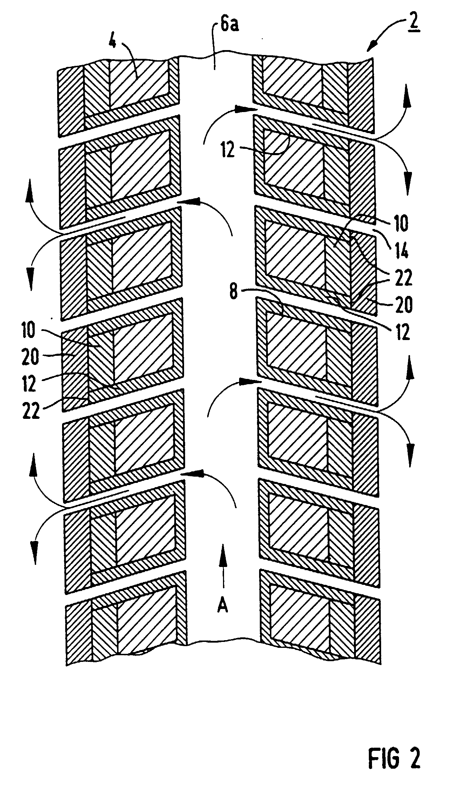

Die Schaufel 2 von Figur 2 entspricht weitgehend derjenigen von Figur 1. Jedoch ist hier außen, d.h. auf der Deckschicht 10, noch eine keramische Wärmedämmschicht 20 vorgesehen. Die Deckschicht 10, die bevorzugt wiederum aus MCrAlY besteht, hat hier die Funktion einer Haftschicht. Die Wärmedämmschicht 20 besitzt eine Dicke von 100 µm bis 500 µm, bevorzugt eine Dicke von 200 µm bis 300 µm. Sie kann aus einem der konventionellen bekannten Materialien bestehen. Bemerkenswert ist, daß die Wärmedämmschicht 20 außen die Deckschicht 10 und im Außenbereich der Querkanäle 8 unter Freilassung der Austrittsöffnungen 14 auch jeweils einen geringen Teil oder Überdeckungsbereich 22 der Anreicherungsschicht 12 bedeckt. Die Wärmedämmschicht 20 kann durch ein atmosphärisches Plasma-Spritzverfahren (Atmospheric Plasma Spraying - APS) oder durch ein physikalisches Aufdampfverfahren (Physical Vapour Deposition - PVD) aufgebracht sein.

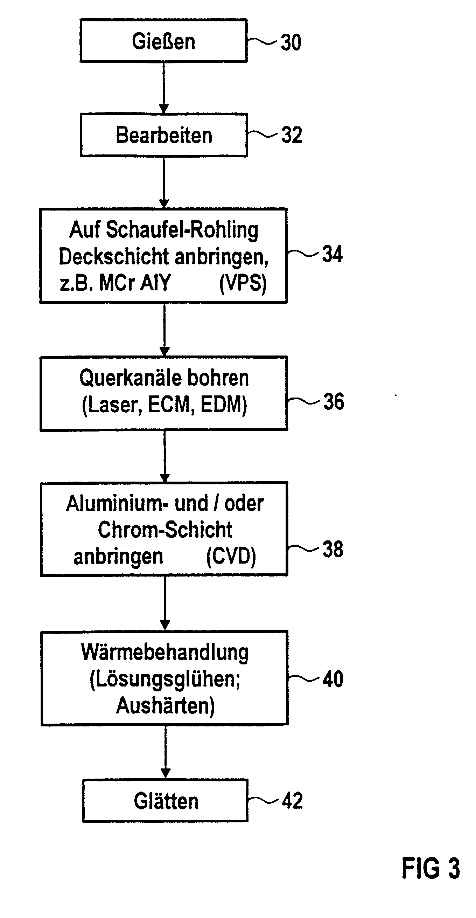

In Figur 3 ist der prinzipielle Weg der Herstellung einer Schaufel 2 gemäß Figur 1 gezeigt. Nach Figur 3 erfolgt zunächst in einem ersten Schritt 30 das Gießen, d.h. das Herstellen des geformten Grundkörpers 4 inclusive Längskanal 6. Es können auch mehrere Längskanäle 6 vorgesehen sein. In einem zweiten Schritt 32 wird eine mechanische Bearbeitung vorgenommen. Hier geschieht das Anfräsen des Schaufelfußes, das Anfräsen der Dichtflächen der Schaufel 4 und/oder ein anderer Bearbeitungsschritt, so daß sich ein Rohling ergibt. Im nächsten Schritt 34 erfolgt das Anbringen der Deckschicht 10 auf dem Grundkörper 4. Diese Deckschicht 10 kann insbesondere aus einer MCrAlY-Legierung bestehen. Das Anbringen geschieht mittels eines Niederdruck- oder Vakuum-Plasma-Spritzverfahrens (Low Pressure Plasma Spraying - LPPS bzw. Vacuum Plasma Spraying - VPS). Dabei wird der Rohling gegebenenfalls einer Anbindungswärmebehandlung unterzogen. Die Deckschicht 10 dient im Betrieb der Schaufel 2 als Schutzschicht.

Im nächsten Schritt 36 geschieht das Bohren der Querkanäle 8. Hierbei kann von verschiedenen Technologien Gebrauch gemacht werden. Handelt es sich um Kanäle 8 mit rundem Querschnitt sowie um Zuleitungen zu geformten Austrittsöffnungen, so kann es sich um eine Laser-Bearbeitung handeln. Geht es dagegen um im Querschnitt z. B. trapezförmige oder anders geformte Filmkühl-Bohrungen, so kann von einem elektrochemischen Senkverfahren (Electro Chemical Milling - ECM) oder von einem elektrischen Entladungssenken (Electrical Discharge Milling - EDM) Gebrauch gemacht werden.

Hieran schließt sich der Schritt 38, und zwar die Innenbeschichtung, an. Es geht hier also um das Anbringen der Anreicherungsschicht 12. Dieses Anbringen kann beispielsweise mit Hilfe eines Reaktivgases nach einem Diffusionsprozeß (Chemical Vapour Deposition - CVD) oder nach einem Pulverpackverfahren mit anschließendem Diffusionsprozeß vorgenommen werden. Eingangs wurde bereits darauf hingewiesen, daß solche Verfahren an sich bekannt sind.

Nachdem also der Grundkörper 4 seine metallische Außenbeschichtung 10, 12 erhalten hat, wird er im Schritt 40 einer Wärmebehandlung zugeführt. Dieser Schritt 40 ist erforderlich, damit der Werkstoff des Grundkörpers 4 seine optimalen Werkstoffeigenschaften erhält. In diesem Schritt 40 geht es insbesondere um ein Lösungsglühen und ein anschließendes Aushärten. Im anschließenden Schritt 42 wird dann die Rauhheit der nun fertiggestellten Schaufel 4 beseitigt. Dies geschieht durch den mechanischen Prozeß des Glättens. Hierbei werden auch Reste auf der Oberfläche der Deckschicht 10 entfernt, wodurch z.B. eine Rißeinleitung durch spröde, aluminiumreiche Phasen vermieden wird.

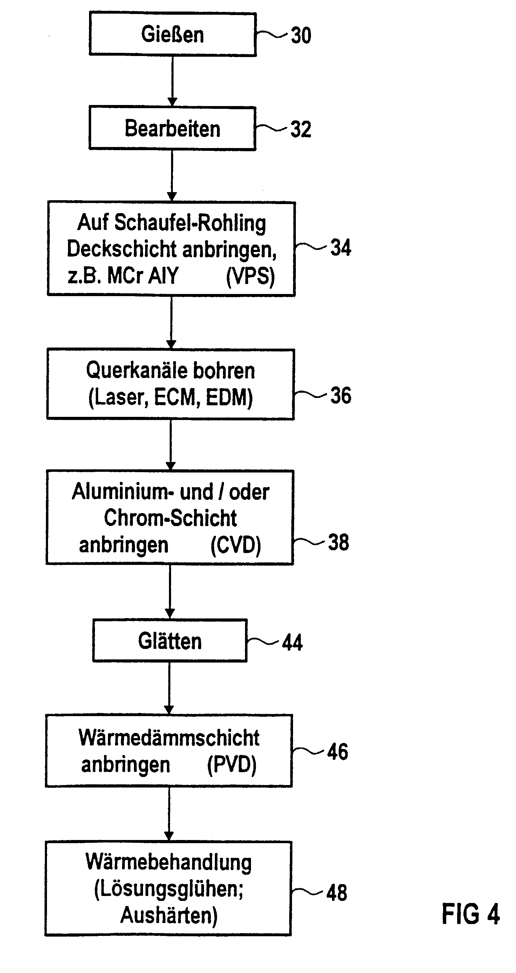

In Figur 4 entsprechen die Schritte 30 bis 38 den Schritten 30 bis 38 von Figur 3. Von einer nochmaligen Beschreibung wird daher abgesehen.

An den Schritt 38 schließt sich in Figur 4 der Schritt 44 des mechanischen Glättens an. Dabei wird die Oberfläche für das folgende Anbringen der Wärmedämmschicht 20 im Schritt 46 vorbereitet.

Im Schritt 46 erfolgt das Anbringen der Wärmedämmschicht 20, und zwar mittels eines Bedampfungsprozesses. Bevorzugt wird dabei vom Elektronenstrahl-Aufdampfprozeß (Electron Beam Physical Vapour Deposition - EB-PVD) Gebrauch gemacht. Während die Schaufel 2 gemäß Herstellung nach Figur 3 nach außen hin eine metallische Oberfläche besitzt, weist nunmehr die Schaufel 2 gemäß Figur 4 nach außen hin eine keramische Oberfläche auf.

Dem Schritt 46 schließt sich ein Schritt 48 zur Wärmebehandlung (entsprechend dem Schritt 40 von Figur 3) an. Auch hier handelt es sich um ein Lösungsglühen und ein Aushärten des Grundmaterials der Schaufel 2. Nach diesem Schritt 48 steht die Schaufel 2 gemäß Figur 2 zum Gebrauch zur Verfügung.

## Patentansprüche

1. Erzeugnis (2), mit
a) einem metallischen Grundkörper (4) aus einer Legierung;
b) mindestens einem im Inneren des Grundkörpers (4) gelegenen Längskanal (6) und eine Anzahl davon abzweigender, jeweils eine zugehörige Austrittsöffnung (14) in dem Grundkörper (4) habender Querkanäle (8);
c) einer metallischen Deckschicht (10), die außen direkt auf dem Grundkörper (4) aufgebracht ist und eine von der Legierung des Grundkörpers verschiedene Legierung aufweist; und
d) einer metallischen Anreicherungsschicht (12), die den Grundkörper (4) lediglich in dem Längskanal (6) und in den Querkanälen (8) bedeckt, wodurch ein beschichteter Kühl-Längskanal (6a) und eine Anzahl davon abzweigender beschichteter Kühl-Querkanäle (8a) für die Durchströmung mittels eines Kühlmediums (A) gebildet sind, wobei die Anreicherungsschicht (12) an jeder Austrittsöffnung (14) zusätzlich einen geringen Teil (16) der Deckschicht (10) bedeckt.

2. Erzeugnis (2) nach Anspruch 1, bei dem die Deckschicht (10) aus einer MCrAlY-Legierung besteht und vorzugsweise eine Dicke von 180 µm bis 300 µm besitzt.

3. Erzeugnis (2) nach Anspruch 1 oder 2, bei dem die Anreicherungsschicht (12) eine Dicke von 30 µm bis 100 µm besitzt.

4. Erzeugnis (2) nach einem der vorigen Ansprüche, bei dem die Anreicherungsschicht (12) eine Diffusionsschicht ist.

5. Erzeugnis (2) nach einem der vorigen Ansprüche, bei dem die Anreicherungsschicht (12) Aluminium und/oder Chrom, vorzugsweise nur Aluminium, als wesentlichen Bestandteil enthält.

6. Erzeugnis (2) nach einem der vorigen Ansprüche mit einer keramischen Wärmedämmschicht (20), die außen die Deckschicht (10) und an jeder Austrittsöffnung (14) auch die Anreicherungsschicht (12) auf jedem geringen Teil (16) der Deckschicht (10) bedeckt.

7. Erzeugnis (2) nach Anspruch 6, bei dem die Wärmedämmschicht (20) eine Dicke von 100 µm bis 500 µm, vorzugsweise von 200 µm bis 300 µm, besitzt.

8. Erzeugnis (2) nach einem der vorigen Ansprüche, welches als Gasturbinenkomponente (2), insbesondere als Schaufel (2), ausgebildet ist.

9. Verfahren zur Herstellung eines Erzeugnisses (2), mit folgenden Schritten in der angegebenen Reihenfolge:
a) ein Grundkörper (4) aus einer Legierung mit mindestens einem im Inneren gelegenen Längskanal (6) wird mit einer metallischen Deckschicht (10) aus einer von der Legierung des Grundkörpers verschiedenen Legierung versehen (34);
b) es werden Querkanäle (6) durch den Grundkörper (4) und die Deckschicht (10) zu dem Längskanal (6) gebohrt (36);
c) der Grundkörper (4) wird in dem Längskanal (6), in den Querkanälen (8) und an Austrittsöffnungen (14) der Querkanäle (8) auf jeweiligen geringen Teilen (16) der Deckschicht (10) mit einer metallischen Anreicherungsschicht (12) versehen (38);
d) der Grundkörper (4) mit der Deckschicht (10) und der Anreicherungsschicht (12) wird einer Wärmebehandlung (40) unterzogen; und
e) die Deckschicht (10) wird geglättet (42).

10. Verfahren zur Herstellung eines Erzeugnisses (2), mit folgenden Schritten in der angegebenen Reihenfolge:
a) ein Grundkörper (4) aus einer Legierung mit mindestens einem im Inneren gelegenen Längskanal (6) wird mit einer metallischen Deckschicht (10) aus einer von der Legierung des Grundkörpers verschiedenen Legierung versehen (34);
b) es werden Querkanäle (6) durch den Grundkörper (4) und die Deckschicht (10) zu dem Längskanal (6) gebohrt (36);
c) der Grundkörper (4) wird in dem Längskanal (6), in den Querkanälen (8) und an Austrittsöffnungen (14) der Querkanäle (8) auf der Deckschicht (10) auf jeweiligen geringen Teilen (16) der Deckschicht (10) mit einer metallischen Anreicherungsschicht (12) versehen (38);
d) die Deckschicht (10) wird geglättet (44);
e) die Deckschicht (10) wird mit einer keramischen Wärmedämmschicht (20) versehen (46); und
f) der Grundkörper (4) mit der Deckschicht (10), der Anreicherungsschicht (12) und der keramischen Wärmedämmschicht (20) wird einer Wärmebehandlung (48) unterzogen.

11. Verfahren nach Anspruch 10, bei dem die Wärmedämmschicht (20) durch ein atmosphärisches Plasma-Spritzverfahren (APS) oder ein physikalisches Aufdampfverfahren (PVD) aufgebracht wird (46).

12. Verfahren nach einem der Ansprüche 9 bis 11, bei dem die Deckschicht (10) durch ein Niederdruck-Plasma-Spritzverfahren (LPPS) oder Vakuum-Plasma-Spritzverfahren (VPS) aufgebracht wird (34).

13. Verfahren nach einem der Ansprüche 9 bis 12, bei dem zum Anbringen der Anreicherungsschicht (12) zumindest eines der Elemente Aluminium und Chrom, vorzugsweise Aluminium, aufgedampft und eindiffundiert wird (38).

14. Verfahren nach einem der Ansprüche 9 bis 13, bei dem die Querkanäle (8) nach einem Laser-Bohrverfahren, einem elektrochemischen Senkverfahren (ECM) oder nach einem Funkenerosionsverfahren (EDM) gebohrt werden (36).

15. Verfahren nach einem der Ansprüche 9 bis 14, bei dem die Wärmebehandlung (40, 48) zu einem Lösungsglühen und/oder einem Aushärten erfolgt.

## Claims

1. Product (2), having
a) a metallic basic body (4) consisting of an alloy;
b) at least one longitudinal duct (6), located inside the basic body (4), and a number of transverse ducts (8) branching off from the said longitudinal duct and in each case having an associated outlet orifice (14) in the basic body (4);
c) a metallic covering layer (10) which is directly applied externally to the basic body (4) and which has an alloy different from the alloy of the basic body; and
d) a metallic enrichment layer (12) which covers the basic body (4) solely in the longitudinal duct (6) and in the transverse ducts (8), with the result that a coated longitudinal cooling duct (6a) and a number of coated transverse cooling ducts (8a) branching off from the latter are formed for the throughflow of a cooling medium (A), the enrichment layer (12) additionally covering a small part (16) of the covering layer (10) at each outlet orifice (14).

2. Product (2) according to Claim 1, in which the covering layer (10) consists of an MCrAlY alloy and preferably has a thickness of 180 µm to 300 µm.

3. Product (2) according to Claim 1 or 2, in which the enrichment layer (12) has a thickness of 30 µm to 100 µm.

4. Product (2) according to one of the preceding claims, in which the enrichment layer (12) is a diffusion layer.

5. Product (2) according to one of the preceding claims, in which the enrichment layer (12) contains aluminium and/or chromium, preferably only aluminium, as an essential constituent.

6. Product (2) according to one of the preceding claims, having a ceramic heat-insulating layer (20) which externally covers the covering layer (10) and, at each outlet orifice (14), also the enrichment layer (12) on each small part (16) of the covering layer (10).

7. Product (2) according to Claim 6, in which the heat-insulating layer (20) has a thickness of 100 µm to 500 µm, preferably of 200 µm to 300 µm.

8. Product (2) according to one of the preceding claims, which is designed as a gas turbine component (2), in particular as a blade (2).

9. Method for producing a product (2), having the following steps in the specified order:
a) a basic body (4) consisting of an alloy and having at least one longitudinal duct (6) located inside it is provided (34) with a metallic covering layer (10) consisting of an alloy different from the alloy of the basic body;
b) transverse ducts (6) are drilled (36) through the basic body (4) and the covering layer (10) to the longitudinal duct (6);
c) the basic body (4) is provided (38) with a metallic enrichment layer (12) in the longitudinal duct (6), in the transverse ducts (8) and at outlet orifices (14) of the transverse ducts (8) on respective small parts (16) of the covering layer (10);
d) the basic body (4) having the covering layer (10) and the enrichment layer (12) is subjected to heat treatment (40) ; and
e) the covering layer (10) is smoothed (42).

10. Method for producing a product (2), having the following steps in the specified order:
a) a basic body (4) consisting of an alloy and having at least one longitudinal duct (6) located inside it is provided (34) with a metallic covering layer (10) consisting of an alloy different from the alloy of the basic body;
b) transverse ducts (6) are drilled (36) through the basic body (4) and the covering layer (10) to the longitudinal duct (6);
c) the basic body (4) is provided (38) with a metallic enrichment layer (12) in the longitudinal duct (6), in the transverse ducts (8) and at outlet orifices (14) of the transverse ducts (8) on the covering layer (10) on respective small parts (16) of the covering layer (10);
d) the covering layer (10) is smoothed (44);
e) the covering layer (10) is provided (46) with a ceramic heat-insulating layer (20); and
f) the basic body (4) having the covering layer (10), the enrichment layer (12) and the ceramic heat-insulating layer (20) is subjected to heat treatment (48).

11. Method according to Claim 10, in which the heat-insulating layer (20) is applied (46) by means of an atmospheric plasma spraying method (APS) or a physical vapour deposition method (PVD).

12. Method according to one of Claims 9 to 11, in which the covering layer (10) is applied (34) by means of a low-pressure plasma spraying method (LPPS) or a vacuum plasma spraying method (VPS).

13. Method according to one of Claims 9 to 12, in which, in order to apply the enrichment layer (12), at least one of the elements aluminium and chromium, preferably aluminium, is vapour-deposited and diffused in (38).

14. Method according to one of Claims 9 to 13, in which the transverse ducts (8) are drilled (36) according to a laser drilling method, an electrochemical countersinking method (ECM) or an electrical discharge machining method (EDM).

15. Method according to one of Claims 9 to 14, in which heat treatment (40, 48) takes place in the form of solution annealing and/or curing.

## Revendications

1. Produit (2) comprenant
a) un corps (4) de base métallique en un alliage ;
b) au moins un canal (6) longitudinal à l'intérieur du corps (4) de base et un certain nombre de canaux (8) transversaux qui en partent et qui ont chacun un orifice (14) de sortie correspondant dans le corps (4) de base ;
c) une couche (10) métallique de recouvrement, qui déposée à l'extérieur directement sur le corps (4) de base et qui comporte un alliage différent de l'alliage du corps de base ; et
d) une couche (12) métallique d'enrichissement qui recouvre le corps (4) de base seulement dans le canal (6) longitudinal et dans les canaux (8) transversaux, ce qui forme un canal (6a) longitudinal de refroidissement, qui est revêtu et un certain nombre de canaux (8a) transversaux de refroidissement qui sont revêtus et qui en partent en vue d'être parcourus par un fluide (A) de refroidissement, la couche (12) d'enrichissement recouvrant à chaque orifice (14) de sortie en plus une petite partie de la couche (10) de recouvrement.

2. Produit (2) suivant la revendication 1, dans lequel la couche (10) de recouvrement est en un alliage de MCr-AlY et a de préférence une épaisseur de 180 µm à 300 µm.

3. Produit (2) suivant la revendication 1 ou 2, dans lequel la couche (12) d'enrichissement a une épaisseur de 30 µm à 100 µm.

4. Produit (2) suivant l'une des revendications précédentes, dans lequel la couche (12) d'enrichissement est une couche de diffusion.

5. Produit (2) suivant l'une des revendications précédentes, dans lequel la couche (12) d'enrichissement renferme de l'aluminium et/ou du chrome, de préférence seulement de l'aluminium, comme constituant essentiel.

6. Produit (2) suivant l'une des revendications précédentes, comprenant une couche (20) calorifuge en céramique, qui recouvre à l'extérieur la couche (10) de recouvrement et sur chaque orifice (14) de sortie également la couche (12) d'enrichissement sur chaque petite partie (16) de la couche (10) de recouvrement.

7. Produit (2) suivant la revendication 6, dans lequel la couche (20) calorifuge a une épaisseur de 100 µm à 500 µm et de préférence de 200 µm à 300 µm.

8. Produit (2) suivant l'une des revendications précédentes, qui est sous la forme d'éléments (2) de turbine à gaz, notamment d'aube (2).

9. Procédé de fabrication d'un produit (2) comprenant les stades suivants dans l'ordre indiqué :
a) on munit (34) un corps (4) de base, en un alliage, ayant au moins un canal (6) longitudinal, à l'intérieur d'une couche (10) métallique de recouvrement en un alliage différent de l'alliage du corps de base ;
b) on perce dans le corps (4) de base et dans la couche (10) de recouvrement des canaux (6) transversaux qui vont jusqu'au canal (6) longitudinal ;
c) on munit (38) le corps (4) de base dans le canal (6) longitudinal, dans les canaux (6) transversaux et aux orifices (14) de sortie des canaux (8) transversaux sur de petites parties (16) de la couche (10) de recouvrement d'une couche (12) métallique d'enrichissement ;
d) on soumet le corps (4) de base, ayant la couche (10) de recouvrement et la couche (12) d'enrichissement, à un traitement (40) thermique, et
e) on polit (42) la couche (10) de recouvrement.

10. Procédé de fabrication d'un produit (2) comprenant les stades suivants dans l'ordre indiqué :
a) on munit (34) un corps (4) de base, en un alliage, ayant au moins un canal (6) longitudinal à l'intérieur d'une couche (10) métallique de recouvrement en un alliage différent de l'alliage du corps de base ;
b) on perce dans le corps (4) de base et dans la couche (10) de recouvrement des canaux (6) transversaux qui vont jusqu'au canal (6) longitudinal ;
c) on munit (38) le corps (4) de base dans le canal (6) longitudinal, dans les canaux (6) transversaux et aux orifices (14) de sortie des canaux (8) transversaux sur de petites parties (16) de la couche (10) de recouvrement d'une couche (12) métallique d'enrichissement ;
d) on polit (44) la couche (10) de recouvrement ;
e) on munit (46) la couche (10) de recouvrement d'une couche (20) calorifuge en céramique ;
f) on soumet le corps (4) de base, ayant la couche (10) de recouvrement, la couche (12) d'enrichissement et la couche (20) calorifuge en céramique, à un traitement (48) thermique.

11. Procédé suivant la revendication 10, dans lequel on dépose la couche (20) calorifuge par un procédé (APS) de pulvérisation au plasma sous la pression atmosphérique ou par un procédé (PVD) de dépôt en phase vapeur par voie physique.

12. Procédé suivant l'une des revendications 9 à 11, dans lequel on dépose (34) la couche (10) de recouvrement par un procédé (LPPS) de projection au plasma sous basse pression ou par un procédé (VPS) de projection au plasma sous vide.

13. Procédé suivant l'une des revendications 9 à 12, dans lequel on dépose en phase vapeur et on fait diffuser (38) au moins l'un des éléments que sont l'aluminium et le chrome, et de préférence l'aluminium, pour obtenir la couche (12) d'enrichissement.

14. Procédé suivant l'une des revendications 9 à 13, dans lequel on perce (36) les canaux (8) transversaux par un procédé de perçage au laser, par un procédé de perçage (ECM) électrochimique ou par un procédé (EDM) d'érosion par étincelle.

15. Procédé suivant l'une des revendications 9 à 14, dans lequel on effectue le traitement (40, 48) thermique jusqu'à un recuit d'homogénéité et/ou un durcissement.
